# EUROPÄISCHE PATENTSCHRIFT

(11) **EP 0 333 032 B1**
(45) Veröffentlichungstag und Bekanntmachung des Hinweises auf die Patenterteilung: **21.07.1993**
(21) Anmeldenummer: 89104188.1
(22) Anmeldetag: 09.03.1989
(51) Int. Cl.: F24D 3/16

(54) **System zum Temperieren von Räumen eines Gebäudes**
Temperature control for building spaces
Système pour tempérer des locaux d'un bâtiment

(30) Priorität: 18.03.1988 DE 3809060
(43) Veröffentlichungstag der Anmeldung: 20.09.1989
(73) Patentinhaber: Ingenieurbüro Timmer GmbH, 42781 Haan (DE)
(72) Erfinder: Reichel, Wolfgang Dr.-Ing.,, D-5860 Iserlohn, (DE); Timmer, Hans-Heinrich, Dipl-.Ing.,, D-4006 Erkrath 2 (DE)
(74) Vertreter: Patentanwälte Dr. Solf & Zapf

(56) Entgegenhaltungen:
- CH-A- 307 255
- CH-A- 314 250
- CH-A- 465 811
- FR-A- 2 159 598
- GB-A- 806 503
- US-A- 1 790 473
- US-A- 3 048 375
- AIR CONDITIONING HEATING AND VENTILATING, Band 57, Nr. 3, März 1960, Seite 104; "Radiant ceiling for heating, cooling, sound conditioning"

## Beschreibung

Die vorliegende Erfindung betrifft ein System zum Temperieren von Räumen eines Gebäudes mit Decken- oder Wandkonstruktionen aus Metall- oder Nichtmetall-Teilen.

Aus der US-A-1 790 473 ist ein Konvektor bekannt, der zur Lufterwärmung dient. Hierbei wird die Konvektion mittels eines Schachtes genutzt. Die schräggestellten Lamellen des Konvektors sollen den Strömungsdruckverlust minimieren. Diese Lamellen sind zu den die Wärmetransportflüssigkeit führenden Rohrleitungen derart angeordnet, daß sie mit ihrer Längserstreckung senkrecht zur Rohrleitungslängsachse ausgerichtet sind, wobei die Lamellenflächen sich gegeneinander abdecken. Diese Anordnung ist erforderlich, um eine große Lamellenfläche zu erreichen, die zur Erzielung der reinen Konvektion erforderlich ist.

Aus der Literaturstelle, Air Conditioning, Heating and Ventilating, 57, (1960.03), 3, 104 ist ein System bekannt, bei dem Konvektoren, bzw. Rippenrohre verwendet werden, die in der Ausbildung den Konvektoren der vorstehenden Druckschrift entsprechen. Hierbei sind diese Konvektoren oberhalb geschlossener Paneele angeordnet. Die Wärmeübertragung zum Raum findet über die glatte durch die Paneele gebildete Deckenfläche statt. Somit ist die Leistung begrenzt, da die Deckenansichtsfläche gleich der Wärmeübertragungsfläche ist. Hierbei erfolgt über die abgehängte Decke die Wärmeübertragung durch Strahlung auf den darunterliegenden Raum. Hierdurch ist der Wirkungsgrad relativ schlecht, da eine zweifache Wärmeübertragung erfolgen muß, und zwar einerseits zwischen dem durch die Rohrleitung fließende Medium und den Konvektorlamellen und andererseits zwischen den Konvektorlamellen und den darunter liegenden Paneelen.

Aus der CH-A-314 250 ist eine Einrichtung zur Raumbeheizung bekannt, bei der längs der Ecke Decke-Wand eines Raumes ein Heizkörper angeordnet ist, dessen dem Raum zugekehrte Seite eine glatte Fläche aufweist, und wobei hinter dieser Fläche mehrere quer zu dieser stehende Wärmeabgabeflächen ausgebildet sind. Somit handelt es sich hier um eine Deckenstrahlungsheizung, die insbesondere für Kühlzwecke nicht geeignet ist. Denn zur Kühlwirkung müßten hinter der Strahlungsfläche liegenden Rohre soweit abgekühlt werden, daß Schwitzwassergefahr entsteht. Die hinter der Strahlungsfläche angeordneten Rohre sind als Rippenrohre ausgebildet.

Aus CH-A-307 255 ist eine Vorrichtung zur Temperaturbeeinflussung von Räumen bekannt, bei der ein langgestreckter Wärmetauscher hinter mindestens einem Schirm im oberen Raumteil unterhalb einer Decke angeordnet ist. Hierbei werden zur Wärmeabgabe Rippenrohre verwendet. Bei diesen Rippenrohren wird wiederum das Wärmeübertragungsprinzip der Konvektion genutzt.

Aus der US-A-3 048 375 ist ein System zur Raumheizung bzw. Raumkühlung bekannt, wobei die einzelnen Wärmeübertragungsprofile schwenkbar auf Rohrleitungen angeordnet sind. Hierbei bilden die einzelnen Wärmeübertragungsprofile Lamellen eines Jalousiesystems, mit denen jalousieartig Fensteröffnungen verschlossen werden können. Hierdurch soll verhindert werden, daß Wärmestrahlung, die durch die Fenster eintritt, den hinter dem Fenster liegenden Raum aufheizen kann bzw. wird vom Fenster aus kommende Kältestrahlung ebenfalls abgeschirmt. Hierbei sind die Lamellen derart ausgebildet, daß eine in sich geschlossene Jalousiefläche entsteht, so daß die Oberfläche maximal die Ansichtsfläche bildet. Die einzelnen Wärmeübertragungsprofile sollen Oberflächen mit unterschiedlichen Absorptions- bzw. Emissionseigenschaften besitzen. Aufgrund dieser Anordnung und Ausgestaltung besitzen die Lamellen lediglich eine Wärmeaufnahme- und Abgabefunktion. Eine Doppelwirkung von Konvektion und Strahlung kann nicht erreicht werden.

Bekannte Deckenstrahlungsheizungen geben ihre Wärme überwiegend (ca. 70 %) durch Strahlung an den Raum ab, weshalb alle Systeme zum Raum gerichtete Flächen enthalten. Deckenstrahlungsheizungen sind zur Raumkühlung wegen zu geringer Kühlleistung (etwa 50 W/m²) nicht geeignet. Die geringe Kühlleistung resultiert aus der wegen Schwitzwasserbildung bei Taupunktunterschreitung auf etwa 17° C begrenzten Kühlwassertemperatur. Außerdem wird bei Deckenkühlung mit den bekannten Deckenheizsystemen wegen der zum Heizen notwendigen mehr oder weniger glatten Deckenflächen der Strahlungsanteil von ca. 70 % auf ca. 50 % reduziert.

Der vorliegenden Erfindung liegt nun die Aufgabe zugrunde, Deckensysteme mit höherer Kühlleistung zu entwickeln, wobei hohe Anlagekosten, bzw. hohe Betriebskosten, vergrößertes Bauvolumen zur Unterbringung der Technik, Zugbelästigungen, Geräuschbelästigungen und Unbehaglichkeiten vermieden werden sollen.

Erfindungsgemäß wird dies durch ein System zum Temperieren von Räumen eines Gebäudes mit Decken- oder Wandkonstruktionen aus Metall- oder Nichtmetall-Teilen, welche an der tragenden oder nicht tragenden Wand oder Decke von Räumen befestigt sind, erreicht, wobei durch ein durch die Decken- oder Wandkonstruktion geleitetes Wärmetransportmedium, die dem Gebäudeinnenraum zugewandten Teile temperiert werden, wobei mindestens an einer zur vom System abgedeckten Wand- oder Deckenfläche parallel verlaufenden, das Wärmetransportmedium führenden Rohrleitung mehrere plattenförmige Wärmeübertragungsprofile in Längsrichtung der Rohrleitung mit ihren Längskanten hintereinanderliegend und parallel zueinander wärmeleitend derart befestigt sind, daß sie schräg zur vom System abgedeckten Wand- oder Deckenfläche verlaufen, wobei die gesamte von den Wärmeübertragungsprofilen gebildete, zum temperierten Raum zugekehrte, schräg zur abgedeckten Wand- oder Deckenfläche verlaufende Strahlungs- und Konvektionsfläche größer ist als die abgedeckte Wand- oder Deckenfläche.

Das erfindungsgemäße Prinzip stellt eine grundsätzliche Abkehr von dem bisher Bekannten dar, nämlich Schaffung sanfter Raumkühlung mittels in Deckenkonstruktionen integrierter, feststehender oder verstellbarer Strahlungs- und Konvektionsflächen. Somit entfällt die Raumkonditionierung durch Klimaanlagen. Es werden behagliche Raumzustände erreicht, wobei aufwendige Klimaanlagen und umfangreiche Bauvolumina zur Unterbringung derselben nicht anfallen. Der Wärmetransport ist einfach und die Raumkühlung erfolgt durch Abführung der Wärme an die Außenluft. Eine Kälteerzeugung entfällt, so daß Anlagekosten eingespart werden, was auch für die Baukosten und Betriebskosten gilt.

Anhand der in den beiliegenden Zeichnungen dargestellten Ausführungsbeispiele wird die Erfindung nunmehr näher erläutert. Es zeigen:
- Fig. 1: eine perspektivische Teildarstellung eines erfindungsgemäßen Systems,
- Fig. 2: eine perspektivische Darstellung einer weiteren alternativen Gestaltung des erfindungsgemäßen Systems,
- Fig. 3: eine perspektivische Teildarstellung des erfindungsgemäßen Systems in alternativer Ausgestaltung,
- Fig. 4: eine Schnittdarstellung eines Systems in alternativer Ausgestaltung,
- Fig. 5: eine Schnittdarstellung des erfindungsgemäßen Systems in alternativer Ausgestaltung,
- Fig. 6: eine Schnittdarstellung eines Systems in alternativer Ausgestaltung,
- Fig. 7: eine Schnittdarstellung eines Systems in alternativer Ausgestaltung,
- Fig. 8: eine Schnittdarstellung des erfindungsgemäßen Systems in alternativer Ausgestaltung.

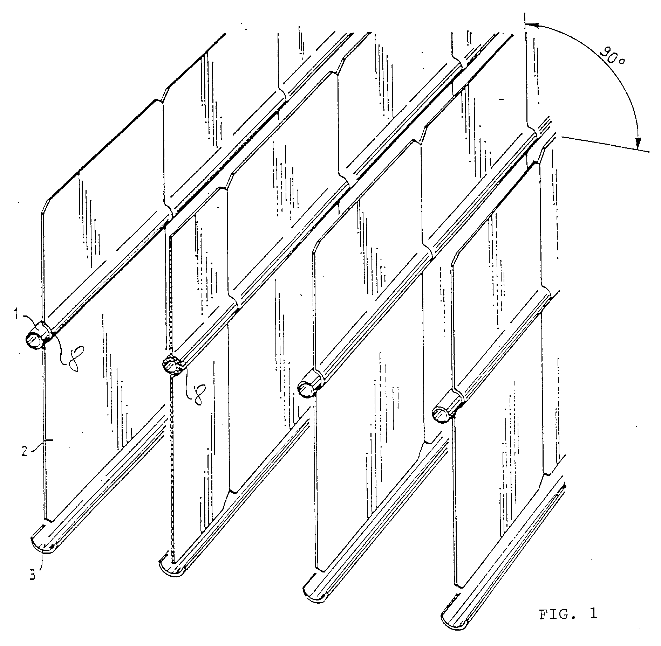

Wie sich aus Fig. 1 ergibt, besteht ein erfindungsgemäßes System aus einer Rohrleitung 1, z. B. aus Kupfer, die von einem Wärmeübertragungsmedium, insbesondere einer Wärmetransportflüssigkeit durchflossen wird und aus Wärmeübertragungsprofilen 2, wobei die Wärmeübertragungsprofile 2 wärmeleitend, kontakt-klemmend, metallisch-verbunden oder auch einstückig mit der Rohrleitung 1 verbunden und als freiliegende konvektionswirksame Temperierungsfläche ausgebildet sind. Es ist jeweils vorzugsweise eine Vielzahl von Wärmeübertragungsprofilen 2 auf einer Rohrleitung beabstandet zueinander angeordnet, und zwar entsprechend der erforderlichen Temperierungsfläche. Die Wärmeübertragungsprofile 2 bestehen vorzugsweise aus Aluminium oder Kupfer.
Zwecks Anpassung der Leistung an Heiz- oder Kühlbetrieb können die Wärmeübertragungsprofile 2 um 90 Grad schwenkbar befestigt sein, so daß sie zwischen einer fast vertikalen Stellung zur Rohrlängsachse und einer fast horizontalen Lage verstellbar sind. Hierbei wird in der fast senkrechten Stellung die maximale Konvektionswirkung und in der fast horizontalen Lage die geringste Konvektionswirkung erzielt. Demnach dient die fast vertikale Stellung am besten für den Kühlbetrieb und die fast horizontale Stellung am besten für den Heizbetrieb. Die Verschwenkung der Profile 2 kann durch Drehung der Rohrleitung mit den darauf befestigten Profilen 2 oder durch Verdrehung der Profile 2 um die festehende Rohrleitung erfolgen. Durch Verwendung bekannter Stellmotoren in Verbindung mit bekannten Regelthermostaten kann die Heiz- und Kühllast durch Schwenken der Wärmeübertragungsprofile dem jeweiligen Wärmebedarf oder der jeweiligen Kühllast des Raumes angepasst werden. Zur Ableitung von Schwitzwasser infolge Taupunktunterschreitung bei Kühlbetrieb können vorteilhafterweise Tropfwasserschalen 3 unterhalb der vertikalen Profile 2 angeordnet sein. Vorzugsweise besitzen die Wärmeübertragungsprofile 2 eine glatte oder profilierte Oberfläche. Im dargestellten Ausführungsbeispiel gemäß Figur 1 besitzen die plattenförmigen Profile eine parallel zu einer Plattenkante verlaufende, im Querschnitt kreisbogenförmige Ausbuchtung 8, die derart geformt ist, daß die Profile 2 mit dieser Ausbuchtung 8 auf die Rohrleitung 1 klemmend aufgeschoben werden können.

Die Profile 2 können auch ganz oder teilweise an deren Oberfläche schallschluckend ausgebildet werden. Die Wärmeübertragungsprofile 2 können auch doppelplattig gelocht mit innenliegendem Schallschluckmaterial ausgeführt werden. Die Wärmeübertragungsprofile 2 können in Rohrachse oder auch quer zur Rohrachse verdreht angeordnet sein. Am System können untergehängte offene, gestaltete Decken befestigt werden. Bei senkrechter Anordnung der Rohre ist das System auch für Wandeinbau geeignet. Zwecks Aufnahme oder Abführung von Wärme an die Außenluft kann das System auch im Freien aufgestellt werden. Als Wärmetransportmedium wird vorzugsweise Wasser verwendet, dem in bekannter Weise korrosionshemmende Zusätze oder, falls erforderlich, auch Frostschutzmittel beigegeben sind.

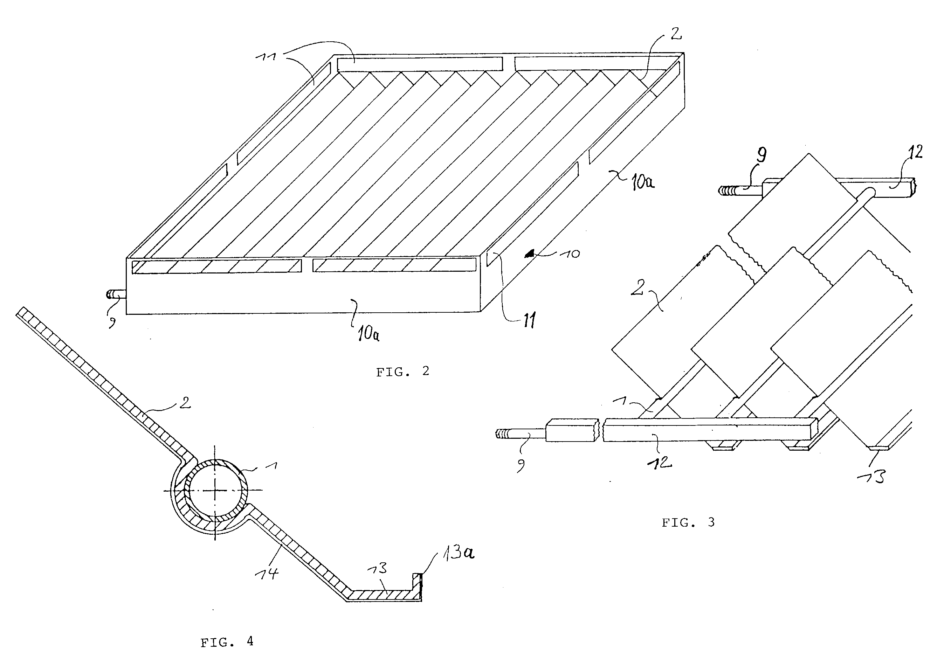

In Fig. 2 ist eine weitere alternative Ausführung der Erfindung dargestellt, wobei ebenfalls gleiche Teile, wie in Fig. 1 dargestellt, mit denselben Bezugsziffern versehen sind.

Hierbei sind im Unterschied zu der vorhergehenden Ausführungsform die Wärmeübertragungsprofile 2 in einem rahmenförmigen Profilelement 10 angeordnet. Dieses besteht aus einzelnen Rahmenblechen 10a, in denen oberhalb der Oberkante der Wärmeübertragungsprofile 2 Luftströmungsöffnungen 11 ausgebildet sind.

Das Kompaktsystem wird an das Kaltwassernetz über Registeranschlüsse 9 angeschlossen und kann unmittelbar unter eine bestehende Decke montiert werden. Die Luftströmungsöffnungen 11 erlauben die Luftnachströmung infolge abwärtsgerichteter Strömung unter den Wärmeübertragungsprofilen 2. Die schräg gestellten Wärmeübertragungsprofile 2 bilden nach unten eine endliche Ansichtsfläche, die einen Strahlungsteil an Wärmeübertragung aufnimmt. Die günstige Wirkung der Absenkung der Umschließungsflächentemperatur auf die Behaglichkeit wird damit realisiert.

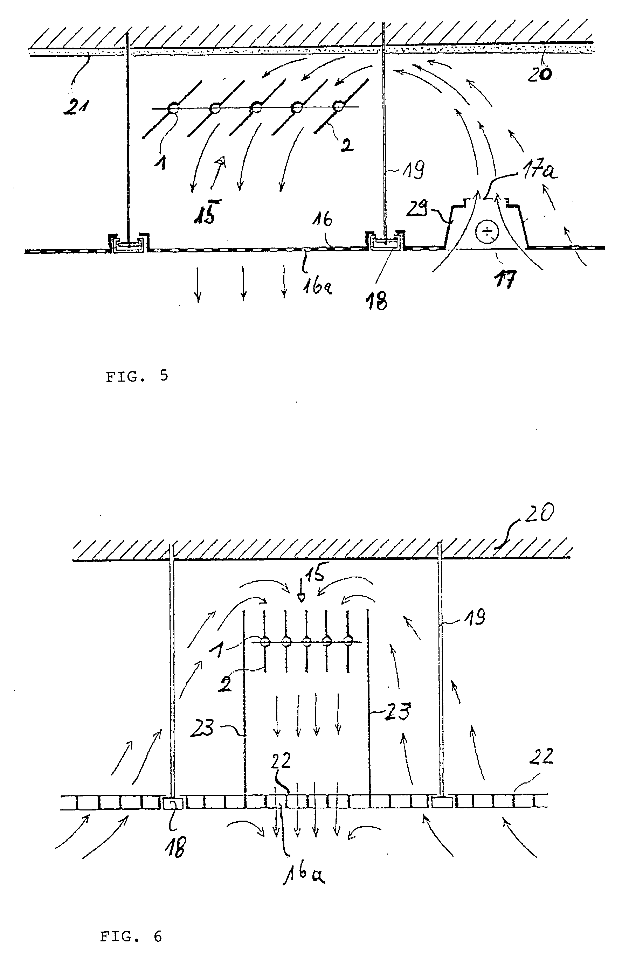

In Fig. 3 wird eine perspektivische Teildarstellung eines unter Fig. 2 beschriebenen Kompaktsystems gezeigt.

Die Rohrleitungen 1, die die Wärmeübertragungsprofile 2 aufweisen, münden mit ihren Enden in Verteilerleitungen 12, die über die Registeranschlüsse 9 an das Kaltwassernetz angeschlossen sind.

Zusätzlich erhalten die Wärmeübertragungsprofile 2 eine untere zu den Rohrleitungen 1 parallele Abwinkelung 13 mit einer endseitigen, senkrechten Aufkantung 13a, die als Schwitzwasserwanne fungiert und das mögliche anfallende Kondensat ableitet.

In Fig. 4 wird ein Wärmeübertragungsprofil 2 dargestellt, welches die untere Abwinkelung 13 aufweist.

Im dargestellten Ausführungsbeispiel besitzen die Wärmeübertragungsprofile 2 dieselbe Breite wie das Rahmenelement 10. Gemäß der Erfindung ist es ebenfalls möglich, schmalere Profile 2 vorzusehen und mehrere Profile 2 nebeneinander anzuordnen.

Um zu verhindern, daß auf der Wärmeübertragungsprofilunterseite Schwitzwasser entsteht und abtropfen kann, ist die Unterseite des Wärmeübertragungsprofiles 2 mit einer Beschichtung bzw. Lackierung 14 versehen, die einen Temperaturgradienten aufbaut und die Wärmeübertragungsprofiltemperatur auf der Unterseite um 1 bis 2 K anhebt und so gegenüber dem Taupunkt eine zusätzliche Sicherheit bietet.

In Fig. 5 werden im Deckenhohlraum angeordneten Wärmeübertragungsprofile 2, als Register 15 ausgeführt, gezeigt. Einen unteren Abschluß des Deckenhohlraumes bilden z. B. Deckenpaneele 16 mit einem bestimmten freien Querschnitt. In diese Paneele 16 lassen sich z. B. Leuchten 29 einbauen. Befestigt werden die nur lose auf einer Tragkonstruktion 18 aufliegenden Paneele 16 über Gewindestangen 19 an einer Rohdecke 20. Unterhalb der Rohdecke 20 kann eine Wärmedämmung bzw. Schallschutzbeschichtung 21 aufgetragen sein.

Werden die Leuchten 29 vorzugsweise als Abluftleuchten mit oberen Öffnungen 17a ausgeführt, erhält die in den Deckenhohlraum einströmende Warmluft, infolge Wärmeentwicklung der Leuchtmittel 18, einen Zusatzaufrieb. Die über die gekühlten Wärmeübertragungsprofile 2 strömende Luft kühlt sich infolge konvektiven Wärmeübergangs ab und erhält dadurch eine abwärts gerichtete Strömungskomponente. Die insbesondere mit einem bestimmten Anteil Luftdurchtritten 16a versehenen Paneele 16 erlauben die Durchströmung der abwärts gerichteten Luftströmung. Gleichzeitig kühlen sich die Paneele 16 ab und können aus dem Raum einen Anteil Strahlungsenergie aufnehmen.

In Fig. 6 zeigt die Wärmeübertragungsprofile 2 in senkrechter Stellung im Deckenhohlraum oberhalb, z. B. einer offenen Rasterdecke 22. Die in den Deckenhohlraum einströmende warme Luft wird beim Vorbeiströmen an den gekühlten Wärmeübertragungsprofilen 2 abgekühlt, entsprechend erhöht sich die Dichte der Luft und die Luft sinkt nach unten.

Durch Registertrennwände 23, die beidseitig der Register 15 aus Wärmeübertragungsprofilen 2 angeordnet sind, wird dieser abwärtsgerichtete Luftstrom vom daneben aufwärtsgerichteten Luftstrom getrennt, siehe eingezeichnete Pfeile. Der unter den Wärmeübertragungsprofilen 2 liegende Teil der Rasterdecke 22 kühlt sich ab und kann Strahlungsenergie aus dem Raum aufnehmen. Die Registerwände 23 erstrecken sich vorzugsweise von der Decke 16 bis zur Oberkante der Wärmeübertragungsprofile 2.

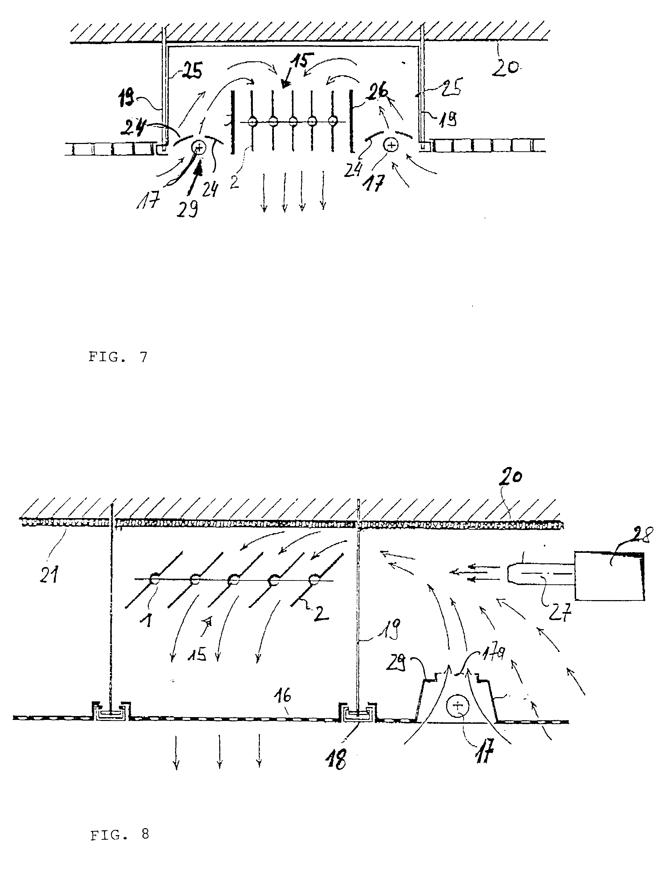

In Fig. 7 wird eine vorteilhafte kompakte Deckeneinbaueinheit, bestehend aus Beleuchtung mit Leuchtmitteln 17 und möglichen Reflektoren 24 sowie den Wärmeübertragungsprofilen 2, gezeigt.

Die Einbaueinheit wird durch Seitenwände 25 vom Deckenhohlraum abgetrennt.

An der Rohdecke 20 kann die Kompakteinheit über Gewindestangen 19 aufgehängt werden.

Die durch die Leuchten 29 strömende erwärmte Raumluft erhält durch die Leuchtmittel 17 einen zusätzlichen Auftrieb und wird beim Überströmen der Wärmeübertragungsprofile 2 abgekühlt und sinkt somit nach unten wieder in den Raum hinein.

Die Register 15 aus Wärmeübertragungsprofilen 2 sind von den Beleuchtungsbereichen durch seitliche Begrenzungswände 26 getrennt, die gleichzeitig für die Schachtwirkung der abfallenden kühleren Luftströmung sorgen. Neben der Kompensierung der Leuchtenwärmelast ist damit zusätzlich die Raumkühlung möglich.
Diese vorteilhafte Beleuchtungskühleinheit kann in beliebige Deckenkonstruktionen integriert werden.

Die Senkrechte Anordnung der Wärmeübertragungsprofile 2 nach den Figuren 6 und 7 ist nicht erfindungsgemäß.

In Fig. 8 wird eine weitere Anwendungsform der Wärmeübertragungsprofile 2 in Verbindung mit einem Düsenstrahlsystem zur Frischlufteinbringung gezeigt.

Dazu sind einzelne Düsen 27 an einem Kanalverteilsystem 28 im Deckenhohlraum angeordnet. Der quer zu den Wärmeübertragungsprofilen 2 gerichtete Düsenstrahl injiziert aus dem Raum in den Deckenhohlraum strömende warme Luft und treibt sie über die gekühlten Wärmeübertragungsprofile 2. Infolge Abkühlung an den Wärmeübertragungsprofilen 2 sinkt die ursprünglich warme Luft nun wieder durch die Paneele 16 in den Raum. Auch eine infolge Injektion verbesserte Zwangsdurchströmung von Leuchten 29 ist möglich.

Der Deckenhohlraum kann zur Rohdecke 20 hin wieder durch eine Wärmedämmung bzw. Schallschutzbeschichtung 21 abgeschlossen sein.

Gleiche Teile in den Fig. 1 bis 8 sind mit denselben Bezugsziffern versehen.

Es liegt im Rahmen der Erfindung, die Wärmeübertragungsprofile 2 in Raumleuchten, Zuluftauslässen und Ablufteinrichtungen, ebenso auch bei schräger Anordnung in Wände, Fenster oder Raumeinbauteile, wie z. B. Möbel zu integrieren. Die Befestigung der Profile 2 kann auch über Rohrschellen oder dergleichen erfolgen.

## Patentansprüche

1. System zum Temperieren von Räumen eines Gebäudes mit Decken- oder Wandkonstruktionen aus Metall- oder Nichtmetall-Teilen, welche an der tragenden oder nichttragenden Wand oder Decke von Räumen befestigt sind, wobei durch ein durch die Decken- oder Wandkonstruktion geleitetes Wärmetransportmedium die dem Gebäudeinnenraum zugewandten Teile temperiert werden, wobei mindestens an eine zur vom System abgedeckten Wand- oder Deckenfläche parallel verlaufenden, das Wärmetransportmedium führenden Rohrleitung (1) mehrere plattenförmige Wärmeübertragungsprofile (2) in Längsrichtung der Rohrleitung (1) mit ihren Längskanten hintereinanderliegend und parallel zueinander wärmeleitend derart befestigt sind, daß sie schräg zur vom System abgedeckten Wand- oder Deckenfläche verlaufen, wobei die gesamte von den Wärmeübertragungsprofilen gebildete, zum temperierten Raum zugekehrte, schräg zur abgedeckten Wand- oder Deckenfläche verlaufende Strahlungs- und Konvektionsfläche größer ist als die abgedeckte Wand- oder Deckenfläche.

2. System nach Anspruch 1,
**dadurch gekennzeichnet,** daß das Wärmeübertragungsprofil (2) schwenkbar um die Rohrachse der Rohrleitung (1) angeordnet ist.

3. System nach Anspruch 2,
**dadurch gekennzeichnet,** daß das Wärmeübertragungsprofil (2) auf der feststehenden Rohrleitung (1) schwenkbar angeordnet ist, oder die Rohrleitung (1) um ihre Längsachse drehbar gelagert ist.

4. System nach einem oder mehreren der Ansprüche 1 bis 3,
**dadurch gekennzeichnet,** daß zur Ableitung von Schwitzwasser Tropfwasserschalen (3) in Abtropfrichtung unterhalb der Wärmeübertragungsprofile (2) angeordnet sind.

5. System nach einem der Ansprüche 1 bis 4,
**dadurch gekennzeichnet,** daß im wesentlichen rechteckige Wärmeübertragungsprofile (2) beabstandet zueinander oder unmittelbar hintereinanderliegend an der Rohrleitung (1) vorhanden sind.

6. System nach Anspruch 5,
**dadurch gekennzeichnet,** daß die Wärmeübertragungsprofile (2) eine zu einer Profilkante parallel verlaufende, kreisbogenförmige Ausbuchtung (8) aufweisen, mit der die Wärmeübertragungsprofile klemmend, die Rohrleitung (1) umfassend auf dieser befestigt sind.

7. System nach einem der Ansprüche 1 bis 6,
**dadurch gekennzeichnet,** daß die Wärmeübertragungsprofile (2) an ihrem unteren Ende eine zur Rohrleitung (1) eine parallele Abwicklung mit einer hierzu senkrechten Aufkantung (13a) aufweisen.

8. System nach einem der Ansprüche 1 bis 7,
**dadurch gekennzeichnet,** daß mehrere Rohrleitungen (1) mit auf diesen befestigten Wärmeübertragungsprofilen (2) in zueinander parallelen Abschnitten hintereinander angeordnet sind und jeweils mit ihren Enden in Verteilerleitungen (12) enden.

9. System nach Anspruch 8,
**dadurch gekennzeichnet,** daß mehrere hintereinander angeordnete Leitungsabschnitte in einem Rahmenprofilelement (10) angeordnet sind, das aus Rahmenblechen (10a) gebildet ist.

10. System nach Anspruch 9,
**dadurch gekennzeichnet,** daß das Rahmenprofil (10) aus Rahmenblechen (10a) gebildet ist, in denen oberhalb der Oberkante der Wärmeübertragungsprofile (2) Luftströmungsöffnungen ausgebildet sind.

11. System nach einem der Ansprüche 1 bis 10,
**dadurch gekennzeichnet,** daß das Wärmeübertragungsprofil (2) eine glatte oder profilierte Oberfläche besitzt.

12. System nach einem der Ansprüche 1 bis 11,
**dadurch gekennzeichnet,** daß die Wärmeübertragungsprofile (2) eine Kunststoffbeschichtung aufweisen.

13. System nach einem der Ansprüche 1 bis 12,
**dadurch gekennzeichnet,** daß die Wärmeübertragungsprofile (2) schallschluckend ausgebildet sind.

14. System nach einem der Ansprüche 1 bis 13,
**dadurch gekennzeichnet,** daß die Wärmeübertragungsprofile (2) unterhalb der Rohrleitung (1) angeordnet sind und mittels an der der Rohrleitung zugekehrten Profilkante wärmeleitend befestigte Befestigungsmittel (7) an der Rohrleitung befestigt sind.

15. System nach Anspruch 14,
**dadurch gekennzeichnet,** daß die Befestigungsmittel als die Rohrleitung (1) umfassende Befestigungsschienen (7) ausgebildet sind.

16. System nach Anspruch 15,
**dadurch gekennzeichnet,** daß an einer Befestigungsschiene mehrere Wärmeübertragungsprofile (2) befestigt sind.

17. System nach einem der Ansprüche 1 bis 16,
**dadurch gekennzeichnet,** daß die Wärmeübertragungsprofile (2) als Register (15) oberhalb einer abgehängten Decke (16, 22) angeordnet sind, und die Decke (16, 22) vorzugsweise Luftdurchtritte (16a) aufweist.

18. System nach Anspruch 17,
**dadurch gekennzeichnet,** daß seitlich versetzt zu den Registern (15) in der Decke (16, 22) parallel zu den Rohrleitungen (1) Leuchten (29) mit oberen Austrittsöffnungen (17a) angeordnet sind.

19. System nach Anspruch 17 oder 18,
**dadurch gekennzeichnet,** daß beidseitig der Register (15) parallel zu den Rohrleitungen (1) Registerwände (23, 26) angeordnet sind, die sich von der Decke (16, 22) bis zur Oberkante der Wärmeübertragungsprofile (2) erstrecken.

20. System nach einem der Ansprüche 17 bis 19,
**dadurch gekennzeichnet,** daß seitlich der Register (15) Luftaustrittsdüsen (27) derart angeordnet sind, daß ihre Austrittsströmungsrichtung quer zu den Wärmeübertragungsprofilen (2) verläuft.

## Claims

1. System for controlling the temperature of spaces of a building, having ceiling or wall constructions of metal or non-metal parts which are secured to the supporting or non-supporting wall or ceiling of spaces, the parts facing the building interior being temperature-controlled by a heat conveying medium which is passed through the ceiling or wall construction, a plurality of plate-shaped heat transfer profiles (2) being secured at least to one pipeline (1), which runs parallel to the wall or ceiling surface covered by the system and which carries the heat conveying medium in heat-conductive manner, in the longitudinal direction of the pipeline (1) with their longitudinal edges lying one behind the other and parallel to one another, such that they run obliquely with respect to the wall or ceiling surface covered by the system, the entire radiation and convection surface which is formed by the heat transfer profiles, which faces the temperature-controlled space and which runs obliquely with respect to the covered wall or ceiling surface being larger than the covered wall or ceiling surface.

2. System according to Claim 1, characterized in that the heat transfer profile (2) is arranged to be pivotal about the pipe axis of the pipeline (1).

3. System according to Claim 2, characterized in that the heat transfer profile (2) is arranged pivotally on the stationary pipeline (1), or the pipeline (1) is mounted to be rotatable about its own longitudinal axis.

4. System according to one or more of Claims 1 to 3, characterized in that, for discharging condensation, drip channels (3) are arranged in the direction of dripping, below the heat transfer profiles (2).

5. System according to one of Claims 1 to 4, characterized in that substantially rectangular heat transfer profiles (2) are provided on the pipeline (1) at a spacing from one another or directly behind one another.

6. System according to Claim 5, characterized in that the heat transfer profiles (2) have an arcuate convex section (8) which runs parallel to a profile edge and by means of which the heat transfer profiles are secured in clamped manner on the pipeline (1) such that they surround it.

7. System according to one of Claims 1 to 6, characterized in that the heat transfer profiles (2) have at their lower end a flat section, parallel to the pipeline (1), with a bent-up edge (13a) which is perpendicular to said flat section.

8. System according to one of Claims 1 to 7, characterized in that a plurality of pipelines (1) having heat transfer profiles (2) secured thereon are arranged one behind the other in mutually parallel sections and each terminate by means of their ends in distributor lines (12).

9. System according to Claim 8, characterized in that a plurality of line sections arranged one behind the other are arranged in a frame profile element (10) which is formed from frame plates (10a).

10. System according to Claim 9, characterized in that the frame profile (10) is formed from frame plates (10a) in which there are made air flow openings above the upper edge of the heat transfer profiles (2).

11. System according to one of Claims 1 to 10, characterized in that the heat transfer profile (2) has a smooth or profiled surface.

12. System according to one of Claims 1 to 11, characterized in that the heat transfer profiles (2) have a plastics coating.

13. System according to one of Claims 1 to 12, characterized in that the heat transfer profiles (2) are constructed to be sound-absorbent.

14. System according to one of Claims 1 to 13, characterized in that the heat transfer profiles (2) are arranged below the pipeline (1) and are secured to the pipeline by means of securing means (7) which are secured in heat-conducting manner to the profile edge facing the pipeline.

15. System according to Claim 14, characterized in that the securing means are constructed as securing rails (7) which surround the pipeline (1).

16. System according to Claim 15, characterized in that a plurality of heat transfer profiles (2) are secured to a securing rail.

17. System according to one of Claims 1 to 16, characterized in that the heat transfer profiles (2) are arranged as a register (15) above a suspended ceiling (16, 22) and the ceiling (16, 22) preferably has air holes (16a).

18. System according to Claim 17, characterized in that lights (29) having upper outlet openings (17a) are arranged laterally offset with respect to the registers (15) in the ceiling (16, 22) parallel to the pipelines (1).

19. System according to Claim 17 or 18, characterized in that there are arranged on either side of the registers (15) parallel to the pipelines (1) register walls (23, 26) which extend from the ceiling (16, 22) to the upper edge of the heat transfer profiles (2).

20. System according to one of Claims 17 to 19, characterized in that air outlet nozzles (27) are arranged laterally with respect to the registers (15) such that their outlet flow direction runs transversely with respect to the heat transfer profiles (2).

## Revendications

1. Système pour tempérer les locaux d'un bâtiment comportant des constructions de plafond ou de paroi en éléments métalliques ou non métalliques, fixées sur la paroi, porteuse ou non, ou sur le plafond des locaux, les éléments en regard du volume intérieur du bâtiment étant tempérés par un agent caloporteur circulant à travers la construction murale ou du plafond, plusieurs profilés caloporteurs (2), qui ont la forme de plaques étant fixés à au moins une conduite tubulaire (1) disposée parallèlement à une surface de la paroi ou du plafond, couverte par le système, ces profilés étant fixés dans la direction longitudinale de la conduite tubulaire (1), les bords longitudinaux étant disposés l'un derrière l'autre et parallèles entre eux pour conduire la chaleur, de manière telle qu'ils s'étendent obliquement par rapport à la face de paroi ou du plafond couverte par le système, l'ensemble de la surface de rayonnement et de convection constitué par les profilés caloporteurs en regard du local et s'étendant obliquement par rapport à la surface de paroi et de plafond étant plus grand que cette surface de paroi ou de plafond couverte.

2. Système selon la revendication 1,
caractérisé par le fait que le profilé caloporteur (2) est disposé de manière pivotante autour de l'axe du tube (1).

3. Système selon la revendication 2,
caractérisé par le fait que le profilé caloporteur (2) est disposé de manière pivotante sur la conduite tubulaire fixe (1) ou que la conduite tubulaire (1) est disposée de manière rotative autour de son axe longitudinal.

4. Système selon l'une ou plusieurs des revendications 1 à 3,
caractérisé par le fait que, pour évacuer l'eau de condensation, des cuvettes (3) sont disposées en dessous des profilés caloporteurs (2) lorsqu'on regarde dans la direction de chute des gouttes.

5. Système selon l'une des revendications 1 à 4,
caractérisé par le fait que la conduite tubulaire (1) comporte des profilés caloporteurs (2) sensiblement rectangulaires, disposés à certains intervalles ou bien disposés bout à bout.

6. Système selon la revendication 5,
caractérisé par le fait que les profilés caloporteurs (2) possèdent une courbure en arc de cercle (8) parallèle à un bord du profilé, grâce à laquelle les profilés caloporteurs sont serrés autour de la conduite tubulaire (1).

7. Système selon l'une des revendications 1 à 6,
caractérisé par le fait que les profilés caloporteurs (2) possèdent à leur extrémité inférieure un développement parallèle à la conduite tubulaire (1) muni d'un chant (13a) perpendiculaire à ce développement.

8. Système selon l'une des revendications 1 à 7,
caractérisé par le fait que plusieurs conduites tubulaires (1), avec les profilés caloporteurs (2) qui y sont fixés, sont disposés les unes derrière les autres par sections parallèles entre elles, leurs extrémités débouchant respectivement dans des conduites distributrices (12).

9. Système selon la revendication 8,
caractérisé par le fait que plusieurs sections de conduites, disposées les unes derrière les autres, sont agencées dans un élément à profilés formant châssis (10), constitué par des tôles formant châssis (10a).

10. Système selon la revendication 9,
caractérisé par le fait que le profilé formant châssis (10) est constitué par des tôles (10a) dans lesquelles des ouvertures de circulation de l'air sont formées au-dessus du bord supérieur des profilés caloporteurs (2).

11. Système selon l'une des revendications 1 à 10,
caractérisé par le fait que le profilé caloporteur (2) possède une face supérieure lisse ou profilée.

12. Système selon l'une des revendications 1 à 11,
caractérisé par le fait que les profilés caloporteurs (2) possèdent un revêtement en matière synthétique.

13. Système selon l'une des revendications 1 à 12,
caractérisé par le fait que les profilés caloporteurs (2) absorbent le son.

14. Système selon l'une des revendications 1 à 13,
caractérisé par le fait que les profilés caloporteurs (2) sont disposés en dessous de la conduite tubulaire (1) et que des moyens de fixation (7) sont fixés, de manière à transférer la chaleur, sur la conduite tubulaire au moyen du bord du profilé en regard de la conduite.

15. Système selon la revendication 14,
caractérisé par le fait que les moyens de fixation ont la forme de rails de fixation (7) entourant la conduite tubulaire (1).

16. Système selon la revendication 15,
caractérisé par le fait que plusieurs profilés caloporteurs (2) sont fixés sur un rail de fixation.

17. Système selon l'une des revendications 1 à 16,
caractérisé par le fait que les profilés caloporteurs (2) sont disposés en tant que registres (15) au-dessus d'un plafond suspendu (16, 22) et que ledit plafond (16, 22) présente de préférence des passages d'air (16a).

18. Système selon la revendication 17,
caractérisé par le fait que des lampes (29) munies d'ouvertures de sortie supérieures (17a) sont disposées dans le plafond (16, 22), décalées latéralement par rapport aux registres (15) et parallèlement aux conduites tubulaires (1).

19. Système selon la revendication 17 ou 18,
caractérisé par le fait que des deux côtés des registres (15), parallèlement aux conduites tubulaires (1), sont placées des parois de registre (23, 26) qui s'étendent du plafond (16, 22) jusqu'au bord supérieur des profilés caloporteurs (2).

20. Système selon l'une des revendications 17 à 19,
caractérisé par le fait que, latéralement par rapport aux registres (15), des buses de sortie d'air (27) sont disposées de manière telle que la direction de sortie du flux est transversale par rapport aux profilés caloporteurs (2).
